# EUROPEAN PATENT SPECIFICATION

(11) **EP 3 474 674 B1**
(45) Date of publication and mention of the grant of the patent: **19.10.2022**
(21) Application number: 17742297.9
(22) Date of filing: 09.05.2017
(51) Int. Cl.: A23G 9/04

(54) **MACHINE FOR CRUSHED-ICE DRINKS, BEVERAGES OR SIMILAR**
MASCHINE FÜR GETRÄNKE MIT ZERKLEINERTEM EIS, GETRÄNKE ODER DERGLEICHEN
MACHINE À BOISSONS À GLACE PILÉE, À BOISSONS CHAUDES OU SIMILAIRES

(30) Priority: 23.06.2016 IT UA20163678
(43) Date of publication of application: 01.05.2019
(73) Proprietor: FA.LU. S.r.l., 80131 Napoli (NA) (IT)
(72) Inventor: CAIANO, Maurizio, 80126 Napoli (IT)
(74) Representative: Romano, Giuseppe
(86) International application number: PCT/IB2017/052690
(87) International publication number: WO 2017/221084

(56) References cited:
- EP-A1- 1 088 784
- EP-A1- 2 578 119
- EP-A1- 3 127 430
- WO-A1-2012/119962
- WO-A1-2014/091393
- JP-A- H10 286 066
- US-A1- 2006 117 785

## Description

The present invention relates to a machine improved for producing and dispensing bar products, such as frozen crushed-ice drinks, or similar.

Traditionally, many problems are faced by this type of machines, all linked to the need for constructing machines according to compromises between performances, sizes, reliability, capability, aesthetics, etc.

All this leads to the implementation of machines which, for example, suffer from problems in keeping the product at the right temperature inside the mixing and containing tanks. In fact, for example if one wants to make such tanks of transparent materials to allow the consumer users to see the product, it is not possible to apply insulating materials outside the tank itself.

Furthermore, still by way of example, the complex shape of the tank and the presence of a vertical dispensing group (of the type commonly adopted on this type of machines) makes particularly complex the implementation of lagging insulating coatings which should be effective in each point wherein the product could stand.

Another problem faced by the currently known machines is more linked to the hygiene aspect and the product preservation.

In particular, in all currently available machines, there is at least one portion of the tank and/or of the dispensing group, wherein there is always residual product after one dispensing procedure. This involves that upon the subsequent dispensing procedure, the residual product is dispensed together with the fresh one.

However, often these machine portions wherein the product stagnates are neither refrigerated nor insulated, as in case of machines with vertical dispensing group. It follows that upon each dispensing procedure one even risks to dispense a quantity of not perfectly preserved product.

Still an additional need can be found in the machines intended to dispense beverages or carbonated crushed-ice drinks.

In fact, it is well known that a carbonated beverage, not preserved in absolutely airtight containers, tends to loose slowly its gas content, thus deteriorating flavour and taste.

On the other side, in these machines it is unavoidable that the product preserved therein, at least in some moments (for example the dispensing moment) is in contact with air and that, consequently, over time the gas concentration inside thereof tends to decrease.

Then, one wishes a machine which could keep unaltered over time the gas concentration in the product inside the machine, so as to be able to offer a product to the best of its properties.

Known machines for crushed-ice drinks, beverages or similar are disclosed in JPH10286066A1, WO2012/119962, EP3127430A1, WO2014/091393A1, EP2578119A1, US2006/117785A1 and EP1088784A1.

The object of the present invention is then to solve the above-mentioned problems, by providing a machine for frozen crushed-ice drinks or the like as defined in claim 1.

Secondary features of the machine according to the present invention are further defined in the depending claims.

The advantages, as well as the features and the use modes of the present invention will result evident from the following detailed description of a preferred embodiment thereof, shown by way of example and not for limitative purpose, by making reference to the figures of the enclosed drawings, wherein:

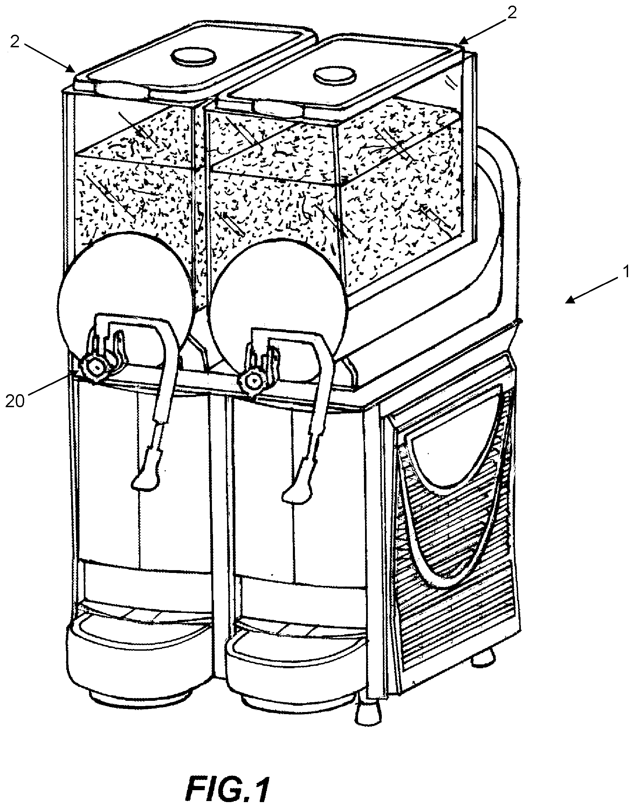

- figure 1 is an overall view of a machine according to the present invention;
- figure 2 is an exploded view of a mixing tank and of an outer coating of the same, showing a possible coupling mode thereof;
- figure 3 is a view showing in particular the coating structure;
- figure 4 is a view of a tank with the coupled outer coating;
- figure 5 is an exploded view of a dispensing group with horizontal axis according to the present invention;
- figures 6A and 6B are views showing the dispensing group in the two closed and open configurations, respectively;

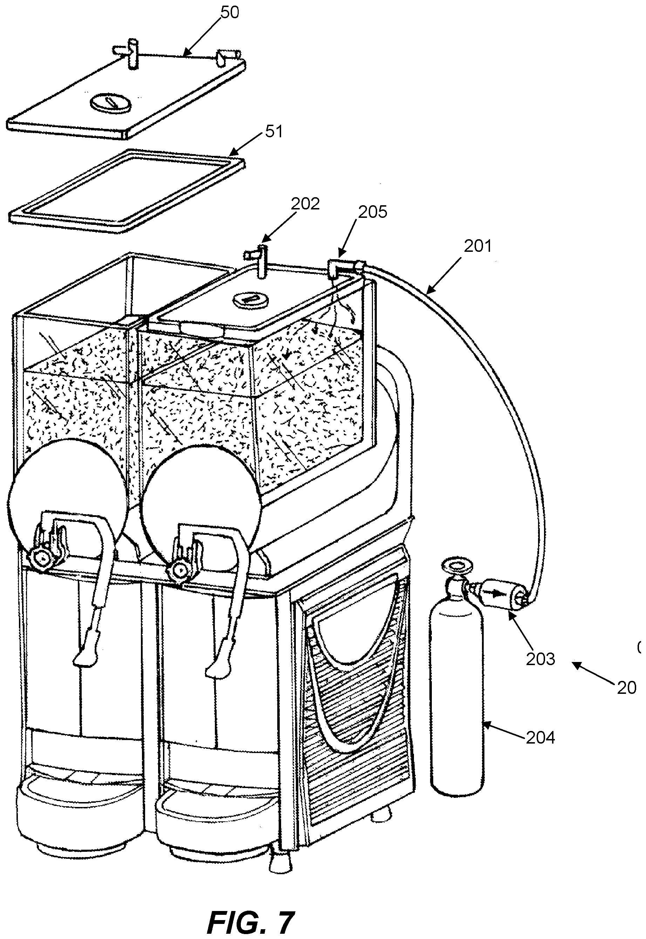

- figure 7 is a view of a machine according to an additional possible embodiment; and

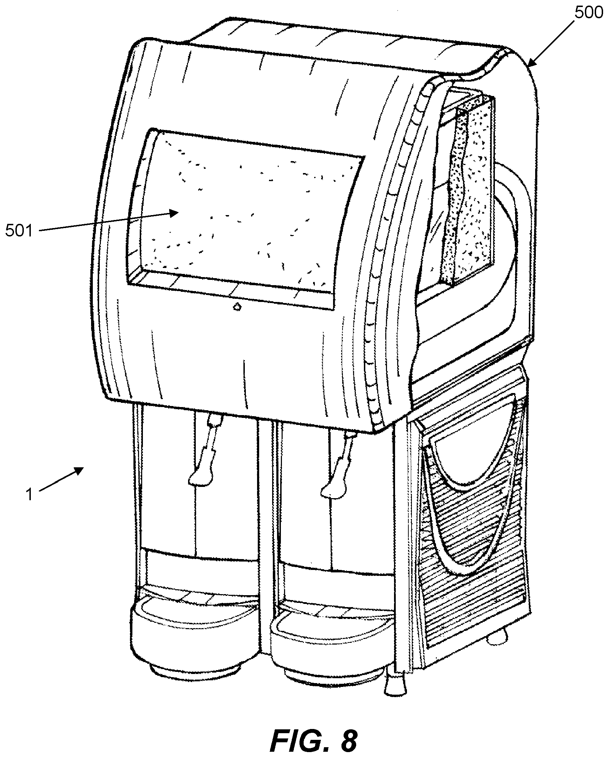

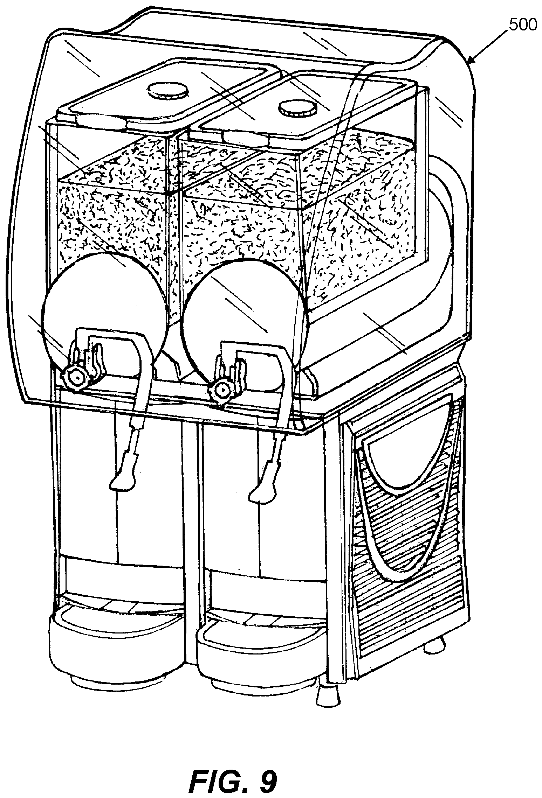

- figures 8 to 10 are views of a machine still according to an additional alternative embodiment.

In order to describe the present invention the figures mentioned above will be referred to.

In general terms, the present invention relates to a countertop machine 1.

Such machine, generally known for producing and dispensing products in form of beverages and/or crushed-ice drinks, first of all comprises a tank 2 for mixing the product. The tank 2 typically is shaped to house a mixing group, not visible in figures.

According to the present invention, the machine is arranged for housing a mixing group with horizontal development and, to this purpose, it has a front wall 5 and a corresponding rear wall 6, side walls 7 and a bottom 8.

It is to be meant that the machine will be equipped with a supporting frame and a group for cooling/heating the product contained in the tank 2, and with corresponding means for inverting the refrigerating cycle of such group. Thanks to such additional functionality, the machine can immediately be adapted for preparing hot instead of frozen products, depending upon the needs and/or the season. This, of course, without altering in any way the inventive principle and the mixing and dispensing functionalities of the machine.

Such peculiarities are to be meant within the comprehension of a person skilled in the art and thus they will be not described herein in details.

Moreover, although the figures show a machine of 'double' type, that is having two tanks for the products to be dispensed, it is to be meant that such configuration has not to be considered limitative to the purpose of the present description.

According to the present invention, on the front wall 5 of the tank 2, and more exactly proximate to the bottom 8, an engagement hole 10 is implemented for a dispensing group 20 of the type with horizontal development.

The engagement of the dispensing group 20 in the engagement hole 10 could be implemented according to different modes which the manufacturer could suitably select among the available ones. Preferably, the engagement type is of reversible type, to allow a complete disassembly of the dispensing group, for maintenance.

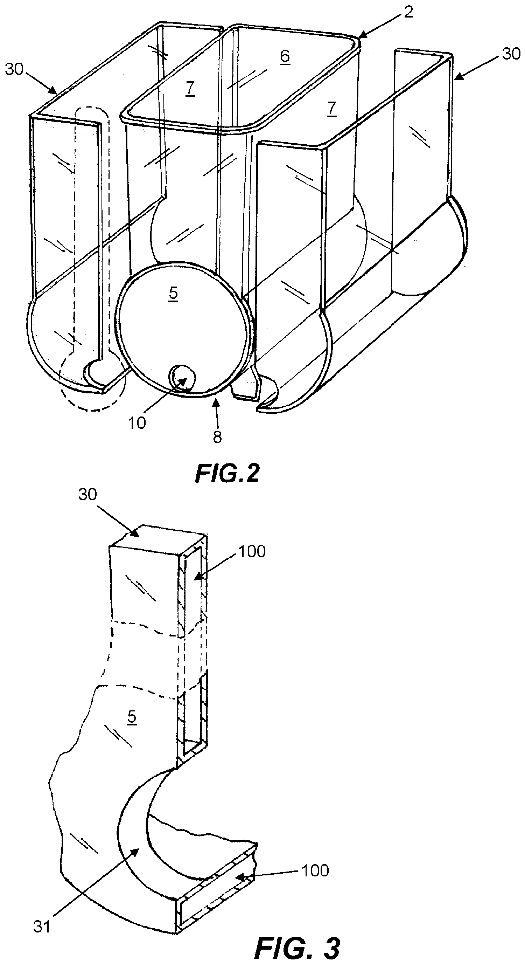

By referring in particular to figures 2 to 4, a mixing tank 2 of the machine, together with an outer coating thereof 30, is shown more in detail.

As clearly illustrated, the coating 30 is implemented so as to form a hollow and sealed lagging element, defining a continuous air gap 100 along the front 5, rear 6, side walls 7 and said bottom 8 of the mixing tank 2.

As illustrated in figure 2, the coating 30 advantageously can be formed by at least two portions coupled and sealed therebetween during the assembly phase of the machine.

The air gap 100 formed by the coating 30, advantageously can be filled-in with air, or with a gas or mixture of inert gases, or with another foam material, so as to maximize the lagging insulating effect.

Preferably, both the mixing tank 2 and the outer coating 30, are made of wholly transparent material, so that, by using air or gas as insulating material for the air gap, the product contained in the tank 2 remains absolutely visible.

The coating 30, at the engagement hole 10, has a passage portion 31, for the dispensing group 20.

In particular, it is to be noted that the dispensing group 20 remains completely outside the coating 30 and it does not take advantage of the insulating effect of the same. However this does not invalidate the effectiveness of the machine in terms of product preservation as, as it will be clearly described hereinafter, the specific shape of the dispensing group makes superfluous the thermal insulation of the group itself.

By making reference to the subsequent figures, a dispensing group 20 according to the present invention is shown.

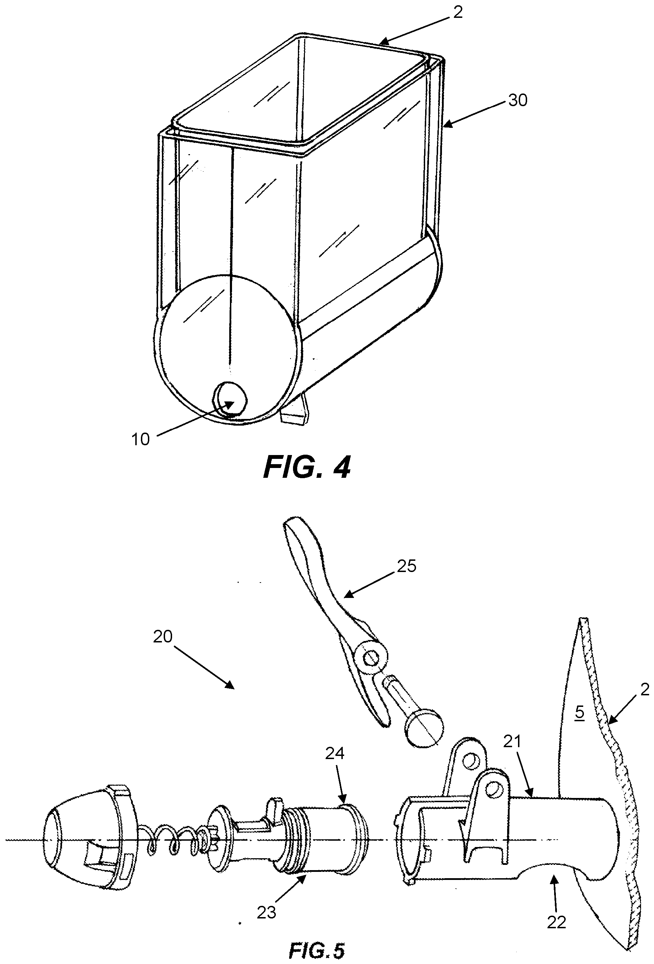

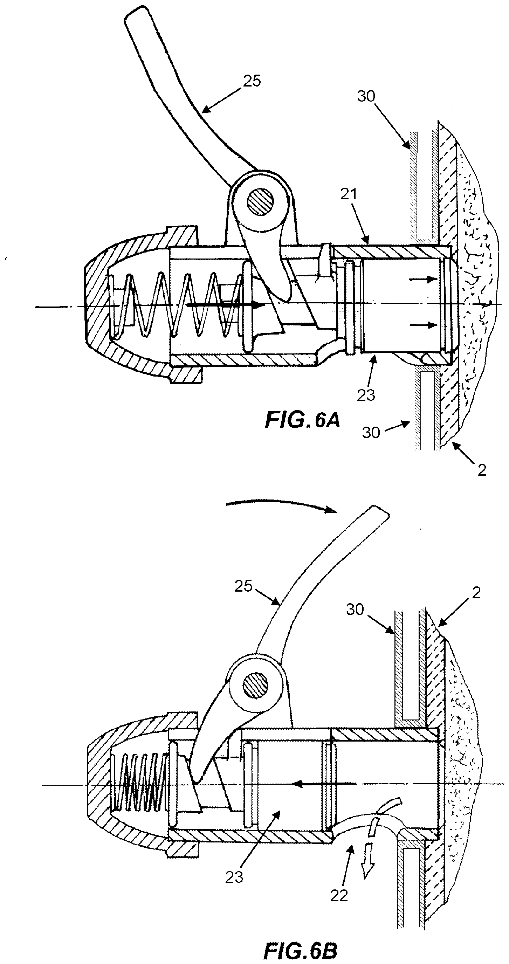

In particular, figure 5 shows an exploded dispensing group 20, whereas figures 6A and 6B show the dispensing group in the closed and open configurations, respectively.

More in detail, the dispensing group 20 comprises a main duct 21 equipped with means for engaging in the engagement hole 10 implemented on the front wall 5 of the mixing tank 2.

As already explained, the modes therewith the engagement is performed are to be considered within the comprehension of a person skilled in the art. By way of example, the means for the engagement can be of screw, bayonet or still interlocking type.

The duct 21 further has a side opening 22 for dispensing the product. The side opening 22 is implemented as a dispensing hole implemented on a side wall of the main duct 21 and it is without a dispensing duct projecting from said side wall. As it will be explained hereinafter, this makes possible to keep the machine perfectly clean during use, by avoiding the possible stagnation of not dispensed product in the dispensing duct itself.

Inside the main duct 21 a tap element 23 is housed, sealingly sliding within the main duct 21 and equipped with a sealing element 24.

The tap element 23 for example can be moved by means of an actuation lever 25, hinged on the main duct 21.

It is still to be meant that such mode for actuating the tap is to be considered as an example and not for limiting purposes. In fact, the tap could be actuated in other ways, even by means of a powered actuator or other.

The tap element 23 is able to assume at least a closing position, shown in figure 6A, wherein the sealing element 24 cooperates with an abutment surface proximate to the engagement hole 10 by preventing the product from outgoing from the tank 2, and a dispensing position, shown in figure 6B, wherein the sealing element 24 is spaced apart from the engagement hole 10 so as to put into communication the inner portion of the tank 2 with the dispensing side opening 22, through the engagement hole 10.

It is to be noted that when the tap is in the closed configuration, the sealing element is exactly 'flush' with the wall of the mixing tank 2. This then allows to have no machine portion, outside the tank 2, wherein product could stagnate and which is not suitable sealed. More in detail, it is to be noted that the whole dispensing group is so as not to have regions for accumulating not dispensed product and, for this reason, the dispensing group itself does not require any thermal insulation.

Furthermore, the sliding of the sealing element 24 between the two (closing and dispensing) configurations implements a procedure for cleaning the duct itself. In fact after a dispensing procedure and during the tap closing, the whole not dispensed product is pushed again in the mixing tank.

At last, the lack in any dispensing duct projecting from the side wall of the main duct 21 avoids definitively each accumulation of residual product after one dispensing procedure.

According to an alternative embodiment, a countertop machine like the one described sofar advantageously can comprise a system 200 for supplying a gas in the mixing tank 2, arranged to keep a substantially constant pressure level in the mixing tank 2 through an adjustment of the gas supply.

This system, which can be used for producing and thus supplying beverages or carbonated crushed-ice drinks, comprises a duct 201 for inletting gas in the mixing tank 2 and a safety valve 202 for compensating possible overpressures.

Of course, in order to make the system to operate correctly, it is preferable that the mixing tank 2 is equipped with a removable lid 50 for closing said mixing tank 2.

The seal of the lid 50 on the edge of the mixing tank 2 is implemented, for example, through a peripheral gasket element 51.

The lid 50, advantageously, can provide the assembly both of the safety valve 202 and an outlet for the gas inletting duct 201.

The gas, typically CO₂, can be supplied for example through a cylinder 204, wherein it is contained under vacuum, but of course different supplying modes can be provided.

At last, according to still an additional embodiment, a machine according to the present invention can comprise an outer element 500 covering said mixing tank 2.

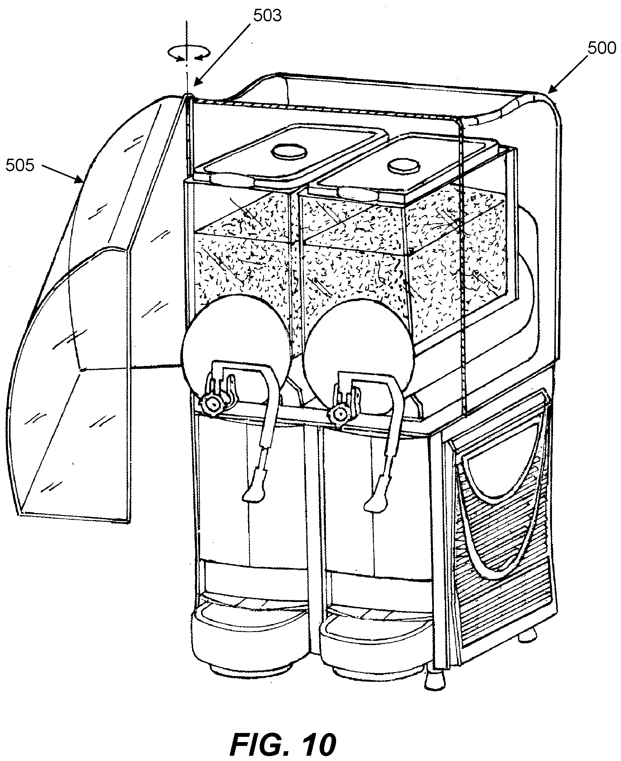

Advantageously, as shown by way of example in figure 10, such outer covering element 500 can have a portion 505 which can be opened for inspection and/or maintenance, for example hinged at a hinge axis 503.

By way of example, according to a variant of the present invention, the outer covering element 500 can comprise a monitor 501 which can be used for displaying images and/or multimedia content.

The present invention has been sofar described according to preferred embodiments thereof, shown by way of example and not for limitative purposes.

It is to be meant that other embodiments can be provided, even obtainable as different combinations with respect to the described ones, all to be considered within the protective scope of the same, as defined by the enclosed claims.

## Claims

1. A countertop machine (1) for producing and dispensing products in form of beverages and/or crushed-ice drinks, comprising:
• a tank (2) for mixing the product, comprising a mixing group with horizontal development, the tank having a front wall (5) and a corresponding rear wall (6), side walls (7) and a bottom (8);
• a dispensing group (20) with horizontal development, engaged in a corresponding engagement hole (10) of the front wall (5) of said tank (2) proximate to said bottom (8);
• an outer coating (30) of said mixing tank (2) implemented so as to form a hollow and sealed lagging element, defining a continuous air gap (100) along said front (5), rear (6), side (7) walls and said bottom (8) of the mixing tank (2);
wherein the dispensing group (20) remains completely outside said coating (30) and comprises:
a main duct (21) equipped with means for the engagement in said engagement hole (10) on the front wall (5) of the mixing tank (2) and a side opening (22) for dispensing the product;
a tap element (23) sealingly sliding within said main duct (21) and equipped with a sealing element (24), so as to be able to assume at least a closing position wherein said sealing element (24) cooperates with an abutment surface proximate to said engagement hole (10) by preventing the product from outgoing from the tank (2), and a dispensing position wherein said sealing element (24) is spaced apart from said engagement hole (10) so as to put in communication said tank (2) with said side opening (22) through said engagement hole (10).

2. Countertop machine (1) according to claim 1, wherein said air gap (100) can be filled-in with air, or a gas or a mixture of inert gases, or with another foam material.

3. Countertop machine (1) according to claim 1 or 2, wherein said coating (30) is formed by at least two portions coupled and sealed therebetween during the assembling phase.

4. Countertop machine (1) according to anyone of the preceding claims, wherein said side opening (22) is implemented by means of a dispensing hole in a side wall of said main duct (21) and it is without a dispensing duct projecting from said side wall.

5. Countertop machine (1) according to anyone of the preceding claims, comprising a system (200) for supplying a gas in the mixing tank (2) apt to keep a substantially constant pressure level in the mixing tank (2) by adjusting the gas supply.

6. Countertop machine (1) according to claim 5, wherein said gas-supplying system (200) comprises a duct (201) for inletting the gas into the mixing tank (2) and a safety valve (202) for compensating possible overpressures.

7. Countertop machine (1) according to anyone of the preceding claims, further comprising a removable lid (50) for closing said mixing tank (2).

8. Countertop machine (1) according to claim 7, wherein said lid (50) implements a seal on the edge of the mixing tank (2).

9. Countertop machine (1) according to claim 8, wherein said seal is implemented by means of a peripheral gasket element (51).

10. Countertop machine () according to claim 6 and one of claims 7 to 9, wherein said lid (50) carries said safety valve (202) and an outlet (205) for said gas inletting duct (201).

11. Countertop machine (1) according to anyone of the preceding claims, comprising an outer element (500) for covering said mixing tank (2).

12. Countertop machine (1) according to claim 6, wherein said outer covering element (500) has a portion (505) which can be opened for inspection and/or maintenance.

13. Countertop machine (1) according to claim 6 or 7, wherein said outer covering element (500) comprises a monitor (501) which can be used for displaying images and/or multimedia content.

14. Countertop machine (1) according to anyone of the preceding claims, comprising two or more mixing tanks (2) put near therebetween.

15. Countertop machine (1) according to anyone of the preceding claims, further comprising a group for cooling/heating the product included in the mixing tank (2).

16. Countertop machine (1) according to claim 15, further comprising means for inverting the refrigerating cycle of said cooling/heating group.

## Patentansprüche

1. Arbeitsplattenmaschine (1) zum Herstellen und Ausgeben von Produkten in Form von Getränken und/oder Crushed-Ice-Getränken, umfassend:
- einen Tank (2) zum Mischen des Produkts, der eine Mischgruppe mit horizontaler Entwicklung umfasst, wobei der Tank eine Vorderwand (5) und eine entsprechende Rückwand (6), Seitenwände (7) und einen Boden (8) hat;
- eine Ausgabegruppe (20) mit horizontaler Entwicklung, die in ein entsprechendes Eingriffsloch (10) der Vorderwand (5) des Tanks (2) in der Nähe des Bodens (8) eingreift;
- eine äußere Ummantelung (30) des Mischbehälters (2), die so ausgeführt ist, dass sie ein hohles und abgedichtetes Isolierelement ausbildet, das einen durchgehenden Luftspalt (100) entlang der vorderen (5), hinteren (6), seitlichen (7) Wand und des Bodens (8) des Mischbehälters (2) definiert;
wobei die Ausgabegruppe (20) vollständig außerhalb der Ummantelung (30) bleibt und umfasst
einen Hauptkanal (21), der mit Mitteln für den Eingriff in das Eingriffsloch (10) an der Vorderwand (5) des Mischbehälters (2) ausgestattet ist, und eine seitliche Öffnung (22) zum Ausgeben des Produkts;
ein Zapfhahnelement (23), das abdichtend in der Hauptleitung (21) gleitet und mit einem Dichtungselement (24) ausgestattet ist, so dass es in der Lage ist, mindestens eine Schließposition einzunehmen, in der das Dichtungselement (24) mit einer Anschlagfläche in der Nähe des Eingriffslochs (10) zusammenwirkt, indem es verhindert, dass das Produkt aus dem Tank (2) austritt, und eine Ausgabeposition, in der das Dichtungselement (24) von dem Eingriffsloch (10) beabstandet ist, um den Tank (2) mit der Seitenöffnung (22) durch das Eingriffsloch (10) in Verbindung zu setzen.

2. Arbeitsplattenmaschine (1) nach Anspruch 1, wobei der Luftspalt (100) mit Luft oder einem Gas oder einem Gemisch von Inertgasen oder mit einem anderen Schaumstoff ausgefüllt werden kann.

3. Arbeitsplattenmaschine (1) nach Anspruch 1 oder 2, wobei die Ummantelung (30) aus mindestens zwei Teilen ausgebildet ist, die während der Zusammenbauphase miteinander verbunden und versiegelt werden.

4. Arbeitsplattenmaschine (1) nach einem der vorhergehenden Ansprüche, wobei die Seitenöffnung (22) mittels eines Ausgabelochs in einer Seitenwand des Hauptkanals (21) realisiert ist und ohne einen von der Seitenwand abstehenden Ausgabekanal ist.

5. Arbeitsplattenmaschine (1) nach einem der vorhergehenden Ansprüche, umfassend ein System (200) zum Zuführen eines Gases in den Mischtank (2), das geeignet ist, ein im Wesentlichen konstantes Druckniveau in dem Mischtank (2) durch Einstellen der Gaszufuhr zu halten.

6. Arbeitsplattenmaschine (1) nach Anspruch 5, wobei das Gasversorgungssystem (200) eine Rohrleitung (201) zum Einlassen des Gases in den Mischtank (2) und ein Sicherheitsventil (202) zum Kompensieren möglicher Überdrücke umfasst.

7. Arbeitsplattenmaschine (1) nach einem der vorhergehenden Ansprüche, ferner umfassend einen abnehmbaren Deckel (50) zum Schließen des Mischtanks (2).

8. Arbeitsplattenmaschine (1) nach Anspruch 7, wobei der Deckel (50) eine Dichtung am Rand des Mischtanks (2) implementiert.

9. Arbeitsplattenmaschine (1) nach Anspruch 8, wobei die Dichtung durch ein umlaufendes Dichtungselement (51) implementiert ist.

10. Arbeitsplattenmaschine (1) nach Anspruch 6 und einem der Ansprüche 7 bis 9, wobei der Deckel (50) das Sicherheitsventil (202) und einen Auslass (205) für die Gasrohrleitung (201) trägt.

11. Arbeitsplattenmaschine (1) nach einem der vorhergehenden Ansprüche, mit einem Außenelement (500) zum Abdecken des Mischtanks (2).

12. Arbeitsplattenmaschine (1) nach Anspruch 6, wobei das Außenabdeckelement (500) einen Abschnitt (505) aufweist, der zur Inspektion und/oder Wartung geöffnet werden kann.

13. Arbeitsplattenmaschine (1) nach Anspruch 6 oder 7, wobei das Außenabdeckelement (500) einen Monitor (501) umfasst, der zur Anzeige von Bildern und/oder Multimedia-Inhalten verwendet werden kann.

14. Arbeitsplattenmaschine (1) nach einem der vorhergehenden Ansprüche, umfassend zwei oder mehr Mischtanks (2), die nahe beieinander angeordnet sind.

15. Arbeitsplattenmaschine (1) nach einem der vorhergehenden Ansprüche, die ferner eine Gruppe zum Kühlen/Heizen des in dem Mischtank (2) enthaltenen Produkts umfasst.

16. Arbeitsplattenmaschine (1) nach Anspruch 15, die ferner Mittel zum Umkehren des Kühlzyklus der Kühl-/Heizgruppe umfasst.

## Revendications

1. Machine de comptoir (1) pour produire et distribuer des produits sous forme de boissons et/ou boissons à glace pilée, comprenant :
une cuve (2) pour mélanger le produit, comprenant un groupe de mélange avec un développement horizontal, la cuve ayant une paroi avant (5) et une paroi arrière (6) correspondante, des parois latérales (7) et un fond (8);
un groupe de distribution (20) avec un développement horizontal, mis en prise dans un trou de mise en prise (10) correspondant de la paroi avant (5) de ladite cuve (2) à proximité dudit fond (8) ;
un revêtement externe (30) de ladite cuve de mélange (2) mis en oeuvre afin de former un creux et un élément de garniture scellé, définissant un espace d'air (100) continu le long desdites parois avant (5), arrière (6), latérales (7) et ledit fond (8) de la cuve de mélange (2) ;
dans laquelle le groupe de distribution (20) reste complètement à l'extérieur dudit revêtement (30) et comprend :
un conduit principal (21) équipé avec un moyen pour la mise en prise dans ledit trou de mise en prise (10) sur la paroi avant (5) de la cuve de mélange (2) et une ouverture latérale (22) pour distribuer le produit ;
un élément de robinet (23) coulissant, de manière étanche, à l'intérieur dudit conduit principal (21) et équipé avec un élément d'étanchéité (24), afin de pouvoir adopter au moins une position de fermeture dans laquelle ledit élément d'étanchéité (24) coopère avec une surface de butée à proximité dudit trou de mise en prise (10) en empêchant le produit de sortir de la cuve (2) et une position de distribution dans laquelle ledit élément d'étanchéité (24) est espacé dudit trou de mise en prise (10) afin de mettre en communication ladite cuve (2) avec ladite ouverture latérale (22) par le biais dudit trou de mise en prise (10).

2. Machine de comptoir (1) selon la revendication 1, dans laquelle ledit espace d'air (100) peut être rempli avec de l'air ou un gaz ou un mélange de gaz inertes, ou avec un autre matériau en mousse.

3. Machine de comptoir (1) selon la revendication 1 ou 2, dans laquelle ledit revêtement (30) est formé par au moins deux parties couplées et scellées entre elles pendant la phase d'assemblage.

4. Machine de comptoir (1) selon l'une quelconque des revendications précédentes, dans laquelle ladite ouverture latérale (22) est mise en oeuvre au moyen d'un trou de distribution dans une paroi latérale dudit conduit principal (21) et elle est sans conduit de distribution qui fait saillie de ladite paroi latérale.

5. Machine de comptoir (1) selon l'une quelconque des revendications précédentes, comprenant un système (200) pour fournir un gaz dans la cuve de mélange (2) apte pour maintenir un niveau de pression sensiblement constant dans la cuve de mélange (2) en ajustant l'alimentation en gaz.

6. Machine de comptoir (1) selon la revendication 5, dans laquelle ledit système d'alimentation en gaz (200) comprend un conduit (201) pour laisser entrer le gaz dans la cuve de mélange (2) et une soupape de sécurité (202) pour compenser les surpressions possibles.

7. Machine de comptoir (1) selon l'une quelconque des revendications précédentes, comprenant en outre un couvercle amovible (50) pour fermer ladite cuve de mélange (2).

8. Machine de comptoir (1) selon la revendication 7, dans laquelle ledit couvercle (50) met en œuvre un joint d'étanchéité sur le bord de la cuve de mélange (2).

9. Machine de comptoir (1) selon la revendication 8, dans laquelle ledit joint d'étanchéité est mis en œuvre au moyen d'un élément de joint périphérique (51).

10. Machine de comptoir (1) selon la revendication 6 et l'une des revendications 7 à 9, dans laquelle ledit couvercle (50) porte ladite soupape de sécurité (202) et une sortie (205) pour ledit conduit d'entrée de gaz (201).

11. Machine de comptoir (1) selon l'une quelconque des revendications précédentes, comprenant un élément externe (500) pour recouvrir ladite cuve de mélange (2).

12. Machine de comptoir (1) selon la revendication 6, dans laquelle ledit élément de recouvrement externe (500) a une partie (505) qui peut être ouverte pour l'inspection et/ou l'entretien.

13. Machine de comptoir (1) selon la revendication 6 ou 7, dans laquelle ledit élément de recouvrement externe (500) comprend un moniteur (501) qui peut être utilisé pour afficher des images et/ou du contenu multimédia.

14. Machine de comptoir (1) selon l'une quelconque des revendications précédentes, comprenant deux cuves de mélange ou plus (2) placées à côté.

15. Machine de comptoir (1) selon l'une quelconque des revendications précédentes, comprenant en outre un groupe pour refroidir/chauffer le produit inclus dans la cuve de mélange (2).

16. Machine de comptoir (1) selon la revendication 15, comprenant en outre des moyens pour inverser le cycle de réfrigération dudit groupe de refroidissement/chauffage.
